(19) Europäisches Patentamt / European Patent Office / Office européen des brevets

(11) **EP 4 335 300 A1**

(12) **EUROPEAN PATENT APPLICATION**

(43) Date of publication:
**13.03.2024 Bulletin 2024/11**

(21) Application number: **22194444.0**

(22) Date of filing: **07.09.2022**

(51) International Patent Classification (IPC):
**A23K 20/111** (2016.01)     **A23K 20/184** (2016.01)
**A23K 50/40** (2016.01)

(52) Cooperative Patent Classification (CPC):
**A23K 20/184; A23K 20/111; A23K 20/132;**
**A23K 40/25; A23K 50/40; A23K 50/42;**
**A23K 50/45; A23K 50/48**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(71) Applicant: **Mars, Incorporated**
**McLean, VA 22101-3383 (US)**

(72) Inventor: **LANGON, Xavier**
**30470 AIMARGUES (FR)**

(74) Representative: **Cabinet Nony**
**11 rue Saint-Georges**
**75009 Paris (FR)**

(54) **MELATONIN FOR REDUCING MOLTING IN A COMPANION ANIMAL**

(57)    The present disclosure relates to the use of melatonin for reducing molting in a companion animal, such as a canine or a feline, including a cat. Melatonin can be administered orally, such as in a food supplement or in a food composition.

The present disclosure also pertains to a melatonin-containing food composition that can be selected among a wet food composition, a semi-moist food composition and a dry food composition.

EP 4 335 300 A1

**Description**

**FIELD OF THE DISCLOSURE**

The present disclosure relates to the maintenance of the coat of companion animals.

**BACKGROUND OF THE DISCLOSURE**

The contribution of the hair coat to environmental protection and behavioral display of companion animals, including canine and feline, is well recognized. Important properties of hair coat include visual appearance.

The coat growth cycle is generally recognized to occur over a cycle consisting of growth (anagen), regression (catagen) and rest (telogen). At the end of hair growth, the inferior portion of the follicle regresses. During this catagen phase the lower follicle moves up to the level of the arrector pili muscle and the base of the fully formed shaft differentiates. Sometime after the follicle enters the resting phase, the hair shaft sheds. Because this shedding process was conceived to have its own definition and controls, some authors have termed this cycle step "exogen" phase. Some authors have found that the largest exogen component is coupled to anagen, that the exogen shaft base differs from the telogen shaft base, and that the shedding shaft is the earliest one formed (Milner et al., 2002, J Invest Dermatol, Vol. 119(3) : 640-644). However, to date, the mechanism and control of coat shedding is largely unknown.

Molting is a natural process that dogs, cats and other animals undergo. It consists of the complete replacement of their hair, adapting to the needs of the animal, ensuring that it is protected in winter and that it does not get hot in summer, so molting usually happens in spring and autumn. The molt occurs, therefore, by two main causes: the change in temperature and the number of hours of light per day.

In animals, molting appears to be dependent on several parameters, such as genetics, photoperiod as well as hormones. As molting appears to occur independently of the follicle growth phase, the molting phase appears to have its own unique set of controls (Johnson, 1972, Mammalian Rev, Vol. 1 : 198-208; Milner et al., 2002, J Invest Dermatol, Vol. 119(3) : 640-644).

However, the precise mechanisms regulating the onset of the different phases of the hair growth cycle still remain to be elucidated.

Usually, the molting process is automatic. However, this is not always the case as, for example, long-haired cats run the risk of swallowing too much hair when they clean themselves, which can cause gastritis or even bowel obstruction. To keep this risk under control, many cats regularly regurgitate undigested hairballs.

To date, molting is dealt with by animal owners, including pet owners, by simply regularly, at least weekly, brushing their animal's coat to remove the shed hair. Feeding the animals with an appropriately balanced food regimen may be of help. Some food supplement compositions comprising vitamins, minerals and essential amino acids aimed at maintaining a healthy shiny coat are also commercially available. Maintaining the animals in a stressless environment is also known to contribute to limit molting.

There remains a need in the art for providing technical solutions for limiting molting in companion animals, especially in canine and feline.

**SUMMARY OF THE DISCLOSURE**

The present disclosure relates to the use of melatonin for reducing molting in a companion animal, which companion animal is preferably a feline, and most preferably a cat.

It also relates to a method for reducing molting in a companion animal comprising a step of administering melatonin, preferably orally, to the said companion animal, which companion animal is preferably a feline, most preferably a cat.

In some embodiments, melatonin is comprised in a melatonin-containing composition.

The melatonin-containing composition can be a food supplement or a complete food composition.

Melatonin or the melatonin-containing composition can be administered by subcutaneous, transdermal or intradermal routes.

In some embodiments, melatonin is comprised in an extract from a melatonin-producing microorganism, preferably an extract from a melatonin-producing yeast.

In some embodiments, melatonin is administered daily.

In some embodiments, melatonin is orally administered at a daily amount ranging from about 0.5 mg/kg of body weight to about 4 mg/kg of body weight, such as at a daily amount of about 2 mg/kg of body weight.

This disclosure also pertains to a melatonin-containing complete food composition for a companion animal which is selected in the group consisting of a wet complete food composition, a semi-moist complete food composition and a dry complete food composition.

## BRIEF DESCRIPTION OF THE FIGURES

**Figure 1** (*i.e. Figure1 and Figure 1 (continued)*) is a reproduction of the questionnaire to be fulfilled by the breeders regarding the quantitative and qualitative features of the coat of the enrolled animals.

**Figure 2** is the reproduction of the questionnaire to be fulfilled by the breeders regarding the behavior of the enrolled animals.

**Figure 3** illustrates the results of the coat beauty (upper part of the figure) and the molting (lower part of the figure) of the enrolled animal with time without melatonin or with a daily dose of 10 mg of melatonin. Black histograms are related to cats belonging to the control group. The grey histograms are related to the test group supplemented with 10mg melatonin.
The upper part of figure 3 reveals the impact of supplementation on the coat beauty, evaluated by the pet-owners. The lower part of figure 3 describes the molting intensity during the same 6 months period.
The sooner (one month) increase of coat beauty (black arrows) is correlated with a reduction of the molting intensity (black arrows). Late December, a shedding increase is recorded (white arrow).

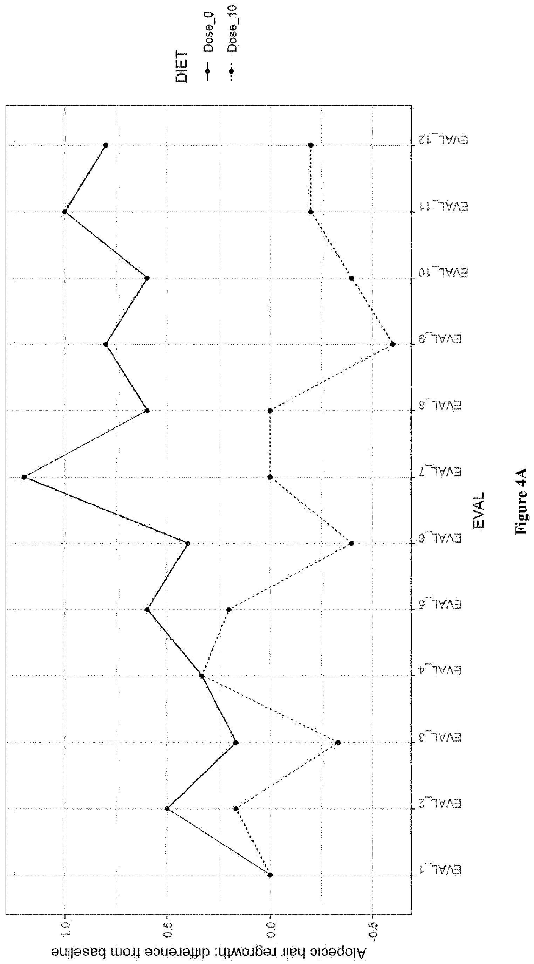

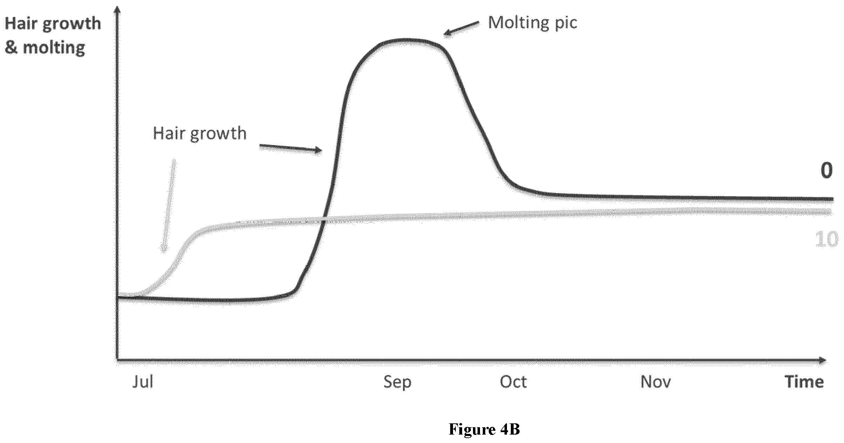

**Figure 4** illustrates the variation of the hair regrowth of the enrolled animals without melatonin or with a daily dose of 10 mg of melatonin.

Figure 4A : (i) ordinate : qualified variation; (ii) abscissa : evaluation number (time). Curve with continuous line : without melatonin. Curve with dashed line : 10 mg melatonin.

Figure 4B : the data from Figure 4A that have been mathematically retreated. (i) ordinate : variation level, in Arbitrary Units; (ii) abscissa : time.

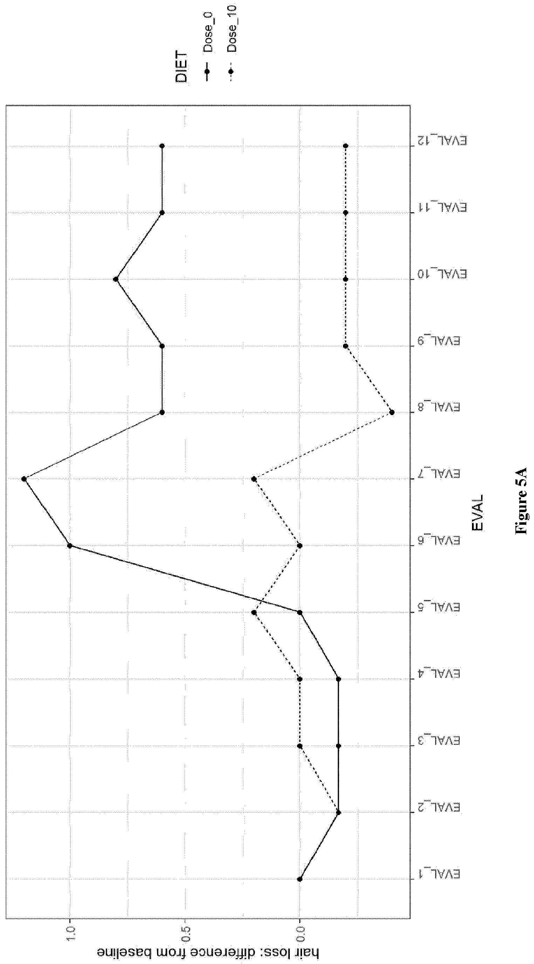

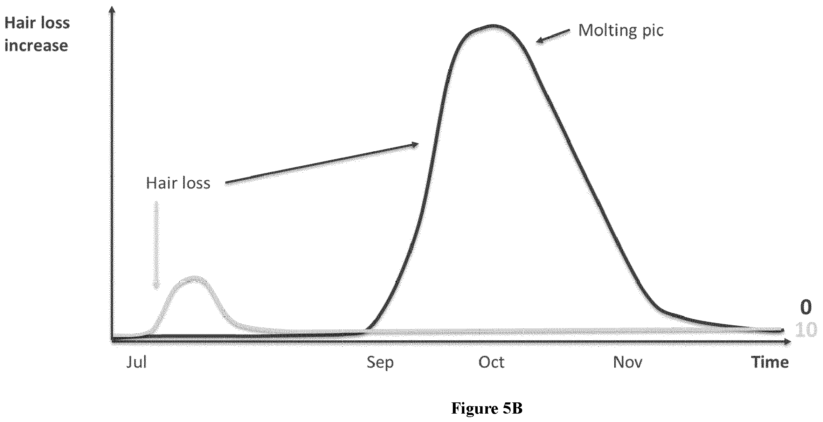

**Figure 5** illustrates the variation of the hair loss of the enrolled animals without melatonin or with a daily dose of 10 mg of melatonin.

Figure 5A : (i) ordinate : qualified variation; (ii) abscissa : evaluation number. Curve with continuous line : without melatonin. Curve with dashed line : 10 mg melatonin.

Figure 5B : the data from Figure 5A that have been mathematically retreated. (i) ordinate : variation level, in Arbitrary Units; (ii) abscissa : time.

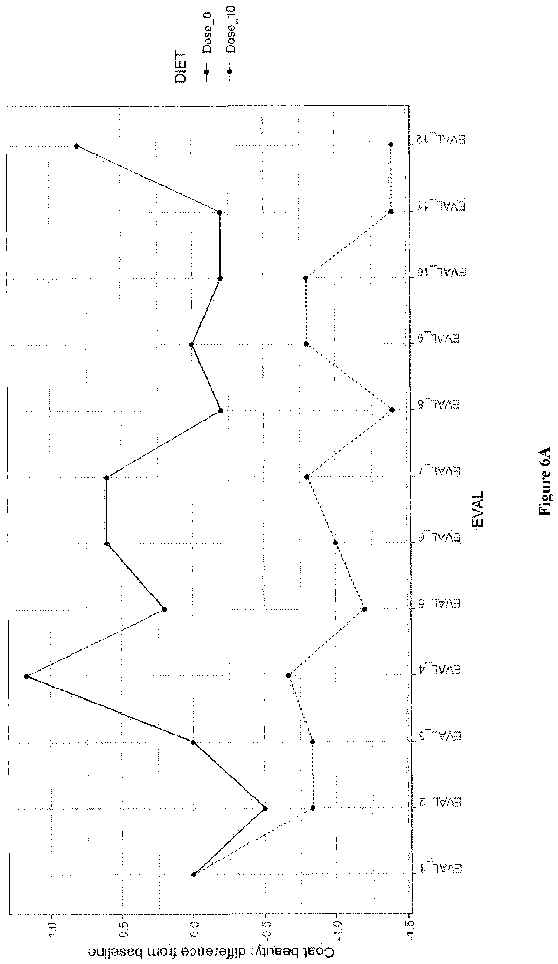

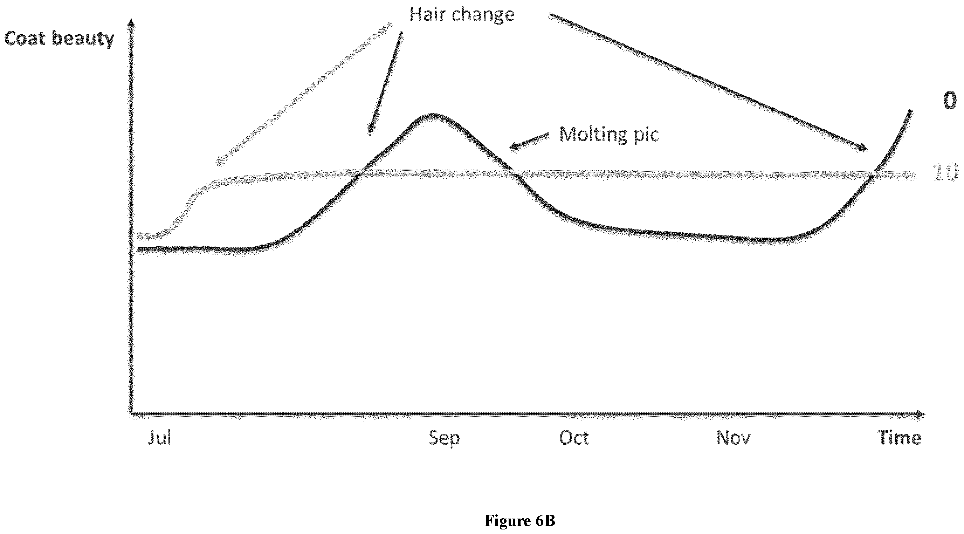

**Figure 6** illustrates the variation of the coat beauty of the enrolled animals without melatonin or with a daily dose of 10 mg of melatonin.

Figure 6A : (i) ordinate : qualified variation; (ii) abscissa : evaluation number (time). Curve with continuous line : without melatonin. Curve with dashed line : 10 mg melatonin.

Figure 6B : the data from Figure 6A that have been mathematically retreated. (i) ordinate : variation level, in Arbitrary Units; (ii) abscissa : time.

## DETAILED DESCRIPTION

Provided herein are technical solutions aimed at improving quantitatively and qualitatively the coat of companion animals, such as feline and canine.
Unexpectedly, it has been found herein that melatonin possesses advantageous properties resulting in the maintenance of a substantially constant coat quality all along the year in companion animals.
More precisely, it has been found that melatonin can regulate coat modifications along the year or moderates seasonal variation, especially can reduce the summer-coat duration in companion animals.
It has been found that melatonin can reduce molting, such as molting severity, or even can substantially block molting in companion animals, especially in feline and canine.
The effect of melatonin on molting reduction notably can lead to a sooner coat beauty improvement in the relevant period(s) of a calendar year, a constant coat beauty with time and thus to an improved visual appearance of the coat.

Also, it is shown herein that melatonin can cause a substantially constant companion animal hair regrowth activity along the year.

The present disclosure relates to the use of melatonin for reducing molting in a companion animal, preferably in canine or feline, and especially in feline.

Melatonin is a natural mammalian hormone that plays an important role in regulating the circadian cycle in humans. It is a clinically effective drug exhibiting positive effects as a sleep aid and a powerful antioxidant when used as a dietary supplement. It is known in the art that secretion of melatonin from the pineal gland plays a key role in mediating the effects of changing the photoperiod on reproduction and other seasonal responses.

Melatonin use in veterinary medicine is evocated since about thirty years, mostly as case reports in publications in the reproduction and in the dermatological fields.

Melatonin properties in hair cycle control are well known in the art. In human, melatonin has been shown to promote hair growth (Fischer, 2009, Hautartz, Vol. 60(12) : 962-972). Melatonin has notably been shown to induce cashmere growth by regulating the proliferation of goat secondary hair follicle stem cells (Zhang et al., 2021, Frontiers in cell and developmental Biology, doi: 10.3389/fcell.2021.686805). The list of animal species showing effects of melatonin on hair growth is very extensive, and includes cashmere goat and other goat species, ferrets, merino sheep, mink, dogs, red deer and others.

Several studies reported an induction or stimulation of the autumn molt by melatonin in a number of animals, including weasel, mink, red deer and soy roam (Allain et al., 1980, Reprod Nutr Dev, Vol. 20(1A) : 197-201; Lincoln et al., 1985, JReprod Fertil, Vol. 73 : 241-253; Webster et al., 1985, J Reprod Fertil, Vol. 73(1): 255-260).

According to the inventors' knowledge, none of the already published case reports relating to the melatonin effects on hair described blinded *in vivo* trials nor *in vivo* trials including a comparison of a tested group with a control group, e.g. with a placebo-receiving group. The targeted dermatologic diseases were alopecia in genetic dermatosis (*e.g.* pattern baldness), scarcely understood dermatoses (*e.g.* recurrent cyclic flank alopecia) or endocrinopathies (*e.g.* alopecia X).

In healthy farm animals, melatonin is used as melatonin-containing implants, such as those commercialized under the brand name of Melovine®. These implants are aimed at modifying sexual period in sheep to incite early breeding. Another usage of these melatonin-containing implants to increase sheep coat (*e.g.* merinos, alpaga) in order to increase wool production.

In cats, melatonin implants have sometimes been used out of label by breeders, the objective being to inhibit cat's sexual cycles during a six-month time period. Some others implant devices also exist for ferrets, always with a sexual-inhibition objective

To the best of the inventors' knowledge, melatonin has never been used in companion animals, preferentially healthy companion animals, for reducing molting.

Definitions

The terms used in this specification generally have their ordinary meanings in the art, within the context of this disclosure and in the specific context where each term is used. Certain terms are discussed below, or elsewhere in the specification, to provide additional guidance in describing the compositions and methods of the disclosure and how to make and use them.

As used in the specification and the appended claims, the singular forms "a," "an" and "the" include plural referents unless the context clearly dictates otherwise. Thus, for example, reference to "a compound" includes mixtures of compounds.

As used herein, the terms "include", "including", "comprise," "comprising," or any other variation thereof, are intended to cover a non-exclusive inclusion, such that a process, method, article, or apparatus that comprises a list of elements does not include only those elements but can include other elements not expressly listed or inherent to such process, method, article, or apparatus.

In the detailed description herein, references to "embodiment," "an embodiment," "one embodiment," "in various embodiments," etc., indicate that the embodiments) described can include a particular feature, structure, or characteristic, but every embodiment might not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

The term "about" or "approximately", as used herein, means within an acceptable error range for the particular value as determined by one of ordinary skill in the art, which will depend in part on how the value is measured or determined, *i.e.,* the limitations of the measurement system. For example, "about" can mean within 3 or more than 3 standard deviations, per the practice in the art. Alternatively, "about" can mean a range of up to 10%, more preferably up to 5%, and more preferably still up to 1% of a given value.

The term "melatonin", as used herein, means "N-acetyl-5-methoxytryptamine", referred to at the UICPA as "N-(2-5-methoxy-1H-indol-3-yl)ethyl]ethanamide" and having the CAS reference number 73-31-4.

As used herein, the term "shedding" means the continuous baseline hair/coat loss along the year.

As used herein, the term "molting" or "moulting" for companion animal means the intense and punctual seasonal, generally biannual, cyclic hair/coat loss, that typically occurs in spring and in autumn.

By the expression "effective amount", it must be understood an amount of melatonin that is sufficient to reduce molting in a companion animal such as, for example, reduce the severity and/or duration of molting in the said companion animal, e.g. in the said canine or feline, for example in said cat.

As used herein, the term "reducing molting" or "reduce molting", means reducing the seasonal hair/coat loss occurring, resulting in a hair/coat loss distributed more continuously during the year.

As used herein, reducing molting in a companion animal can encompass decreasing the level of the hair/coat loss variations during the year, and more particularly the level of the two hair/coat loss pics in spring and in autumn.

As used herein, reducing molting in a companion animal can encompass postponing the moment when each of the biannual coat loss occurs.

As used herein, reducing molting can also encompass decreasing the amount of hair loss due to molting, *i.e.* decreasing or reducing molting severity.

As used herein, the terms "animal", or "pet" or "companion animal" can be used, for example, to refer to domestic or wild animals. In certain embodiments, the terms can refer to canine, including dogs, or feline, including cats.

As used herein, the term "feline" encompasses animals, including pet animals selected from cheetah, puma, jaguar, leopard, lion, lynx, liger, tiger, panther, bobcat, ocelot, smilodon, caracal, serval and cats. As used herein, cats encompass wild cats and domestic cats. In particular embodiments, the cats are domestic cats.

As used herein, the term "canine" encompasses animals, including pet animals selected from recognized dog breeds (some of which are further subdivided), which may can include afghan hound, airedale, akita, Alaskan malamute, basset hound, beagle, Belgian shepherd, bloodhound, border collie, border terrier, borzoi, boxer, bulldog, bull terrier, cairn terrier, chihuahua, chow, cocker spaniel, collie, corgi, dachshund, dalmatian, doberman, English setter, fox terrier, German shepherd, golden retriever, great dane, greyhound, griffon bruxellois, Irish setter, Irish wolfhound, King Charles spaniel, Labrador retriever, lhasa apso, mastiff, newfoundland, old English sheepdog, papillion, pekingese, pointer, pomeranian, poodle, pug, rottweiler, St. Bernard, saluki, samoyed, schnauzer, Scottish terrier, Shetland sheepdog, shih tzu, Siberian husky, Skye terrier, springer spaniel, West Highland terrier, whippet, Yorkshire terrier, etc.

As used herein, the terms "food composition" or "diet" refer to a material containing proteins, carbohydrates and/or fats, which is used in the body of an organism to sustain growth, repair and vital processes and to furnish energy. Foods can also contain supplementary substances or additives, for example, minerals, vitamins and condiments (See Merriam-Webster's Collegiate Dictionary, 10th Edition, 1993, incorporated herein by reference). In a particular embodiment, a food composition according to the present disclosure consists of a nutritionally complete food composition that provides the complete and balanced nutritional requirement to companion animals, and especially to feline or canine. Thus, a food composition as described herein is a complete food; *e.g.,* a complete food, that is a nutritionally adequate feed with which the said animal, e.g., the said companion animal, can be fed as the sole ration and is capable of sustaining life without additional food (except water). Further, said nutritionally complete food composition causes no significant change in the companion animal, *i.e.,* body weight and/or also in the Body Condition Score (BCS). The food composition can contain a carrier, a diluent, or an excipient. Depending on the intended use, the carrier, diluent, or excipient can be chosen to be suitable for animal use, especially for companion animals use such as feline and canine.

Illustratively, a food composition as described herein may include, but is not limited to, protein, crude fat, ash, crude fiber, starch, calcium, phosphorus, sodium, chloride, potassium, magnesium, iron, water, copper, manganese, zinc, selenium, vitamin A, vitamin D3, vitamin B1, vitamin B2, vitamin B6, vitamin B12, vitamin B7, vitamin B9, cholin chloride, arachidonic acid, W3 fatty acid or W6 fatty acid.

As used herein, a "food supplement" designates a source of nutrients, substances for nutritional or physiological purposes, or plants and plant preparations, which are notably intended to compensate for deficiencies in an animal's regular diet and/or to provide useful ingredients or substances to an animal's regular diet. A food supplement is usually in the form of capsules, lozenges, tablets, pills, powder packets or liquid forms (ampoules, vials with droppers). Food supplements encompass compositions comprising melatonin and compositions consisting essentially of melatonin, such as an aqueous suspension of melatonin.

The term "animal protein" as used herein refers to proteins that originate from vertebrates, such as mammals, poultry and fish. Animal protein may originate, for example, from muscle meat, organs, tendons or bone. Proteins originating from milk or eggs are not considered animal proteins.

The term "non-animal protein" as used herein refers to proteins that are not animal protein. Examples of non-animal protein include vegetable proteins, algal proteins, egg proteins, milk proteins, microbial proteins and insect proteins.

The term "starch" as used herein refers to a polysaccharide that is composed of amylose and amylopectin.

The term "fat" as used herein refers to lipidic compounds, fatty acids and esters of fatty acids such as triglycerides, diglycerides, monoglycerides as well as phospholipids.

The term "palatability" means a relative preference of an animal for one food product to another. Palatability refers to the overall willingness of an animal to eat a certain food product. Advantageously but not necessarily, palatability further refers to the capacity of the eaten food product to satisfy the animal. Whenever an animal shows a preference, for example, for one of two or more food products, the preferred food product is more "palatable", and has "enhanced palatability". The relative palatability of one food product compared to one or more other food products can be determined, for example, in side-by-side, free- choice comparisons, e.g., by relative consumption of the food products, or other appropriate measures of preference indicative of palatability. It can advantageously be determined by a standard testing protocol in which the animal has equal access to both food products such as a test called "two-bowl test" or "versus test" (see below). Such preference can arise from any of the animal's senses, but typically is related to, inter alia, taste, aftertaste, smell, mouth feel and/or texture.

As used herein the term "providing" comprises selling, supplying, administering, or feeding.

As used herein, the term "weight percent" or "wt %" or "by weight" is meant to refer to either (i) the quantity by weight of a constituent/component in a composition as a percentage of the total weight of the composition; or (ii) the quantity by weight of a constituent/component in the material as a percentage of the weight of the final material or product.

The expressions "dry matter (DM) basis" must be interpreted as a method of expressing the concentration of a nutrient or a component in a feed by expressing its concentration relative to its dry matter content (the concentration remaining once the moisture has been taken out). At the opposite, the expression "as fed" must be interpreted as a method of expressing the concentration of a nutrient or a component in a feed by expressing its concentration in the state it is fed, which includes moisture.

Description

A first aspect of the present disclosure relates to the use of melatonin for reducing molting in a companion animal.

In an embodiment, the companion animal can be a healthy companion animal, which means a companion animal which is not affected with any disorder or disease.

In another embodiment, the companion animal can be a companion animal which is not affected with a disorder or disease causing a coat loss, which encompasses a companion animal which is not affected with a skin disorder or disease. According to this embodiment, the companion animal can be affected with any disorder or disease but is not affected with a skin disorder or disease.

In another embodiment, the companion animal can be a non-healthy animal, such as an animal affected with any disorder or disease. In such an embodiment, without limitation, said non-healthy companion animal is preferably not affected with a skin disorder or disease.

In an embodiment, the said companion animal is a fully grown animal, which means an animal having about18 months of age or older.

In another embodiment, the said companion animal is a growing animal, which means a companion animal having about 8 months of age or older and up to about 18 months, in which it is intended to reduce molting after molting appears for the first time.

An embodiment of this disclosure relates to a method for reducing molting in a companion animal comprising a step of administering melatonin to the said companion animal.

An embodiment of this disclosure relates to a method for reducing molting in a companion animal comprising a step of administering an effective amount of melatonin to the said companion animal.

Another embodiment of this disclosure relates to composition comprising melatonin for its use in reducing molting in a companion animal.

As it is known in the art, molting can be easily determinable, e.g. by brushing a tested animal at defined time intervals and weighing the hair loss resulting from the brushing step. Time intervals may be daily, bi-weekly, weekly, every two weeks or monthly. A weekly or every two weeks' time interval between two successive brushing steps is in most cases appropriate for determining the level of molting. Consequently, reducing molting is determinable, for a companion animal, by a reduction of the expected amount of seasonal hair loss.

As shown in the examples herein, reduction of molting leads to a detectable coat beauty improvement.

Another aspect of the present disclosure also concerns the use of melatonin for improving the beauty of the coat of a companion animal.

An embodiment of this disclosure also concerns a method for improving the beauty of the coat of a companion animal comprising a step of administering an effective amount of melatonin to the said companion animal.

Another embodiment of this disclosure relates to composition comprising melatonin for its use for improving the beauty of the coat of a companion animal.

As determined herein, beauty of the coat of a companion animal, such as a feline, typically encompasses (i) density of the hair, (ii) color density of the hair, (iii) smoothness of the hair and (iv) length of the hair.

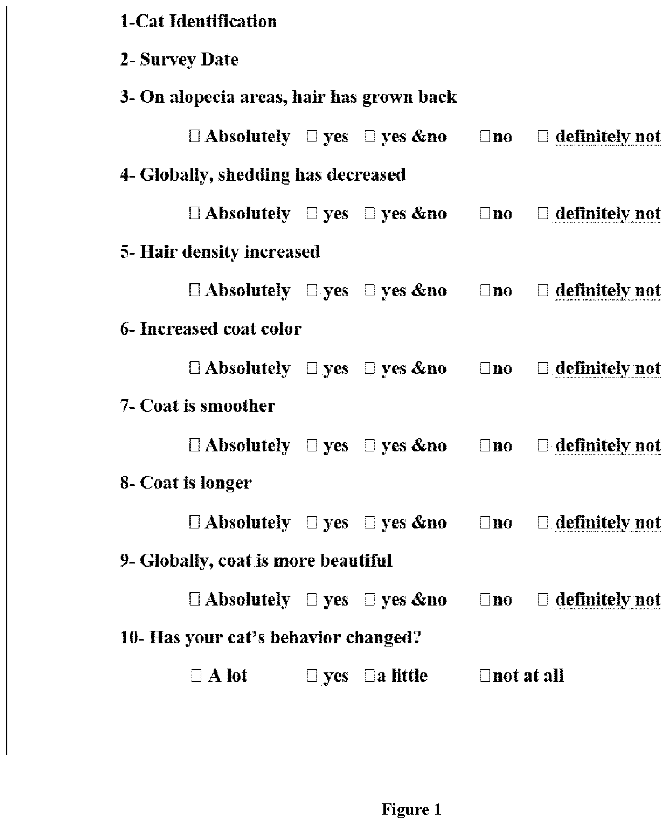

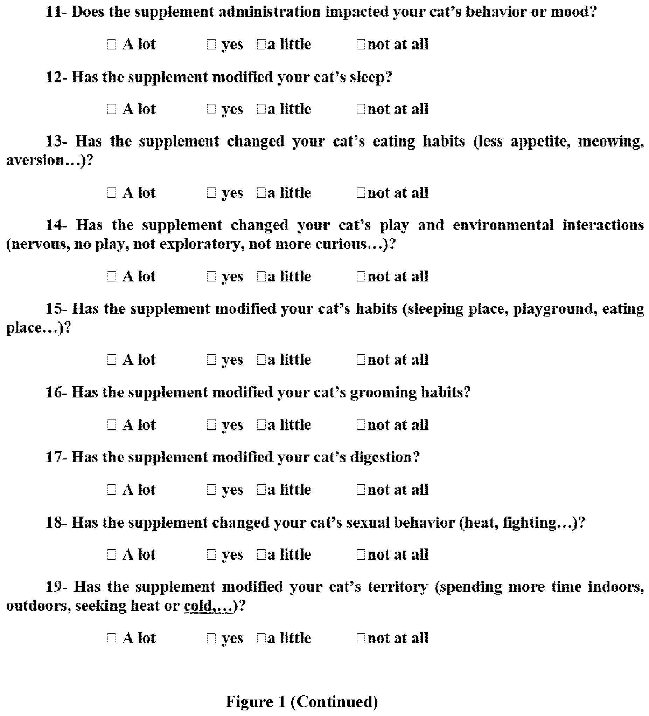

Beauty improvement can be qualitatively determined by analyzing the responses of a companion animal owner, which can encompass an animal breeder, to a subjective questionnaire such as that illustrated in Figure 1. A beauty improvement score, which consists of an arbitrary value, can be assessed from the responses to a beauty questionnaire. The score value allows determining the actual positive effect of melatonin on the companion animal coat beauty.

As shown in the examples herein, and contrary to what might have been expected based on the knowledge acquired on the human species, melatonin administration to a companion animal, such as a feline, does not cause any detectable change in the animal behavior. Melatonin administration has not been found to induce any undesired effect such as, for example, undesired effects on the sleep, the seasonal clock, the level of stress or the sexual activity of the companion animal.

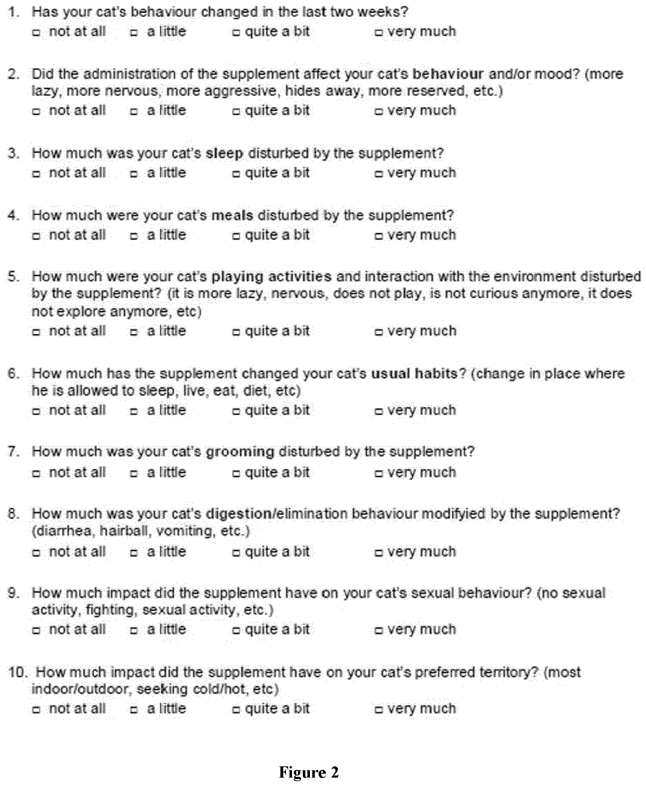

Assessing changes in a companion animal, such as a feline, behavior can be qualitatively determined by analyzing the responses of a companion animal owner, which encompasses an animal breeder, to a subjective questionnaire such as that illustrated in Figure 2. Changes in the animal behavior can be determined from the responses to a behavior questionnaire.

In general, melatonin is known in the art to be devoid of toxicity, even if administered at a dose of 20 mg/kg of body weight. This is the reason why it has never been possible to determine an $LD_{50}$ value (dose at which 50% of the administered subjects die) for melatonin.

In preferred embodiments, companion animal is a feline or a canine, preferentially a feline, and more preferentially the feline is a cat.

*Frequency of melatonin administration*

Melatonin can be provided orally in a food composition, such as in a complete food composition, or in a food supplement.

A "complete food composition" may also be termed a "nutritionally complete food composition" herein.

In some embodiments, the appropriate amount of melatonin can be administered through a single administration step, such as provided orally in a food composition, such as in a complete food composition, or as a food supplement.

In some other embodiments, melatonin can be administered twice daily during the appropriate treatment time period. In some embodiments, melatonin can be administered daily, every two days, bi-weekly, weekly, every two weeks, twice a month or monthly, during the appropriate treatment time period.

In some other embodiments, melatonin can be administered daily during the appropriate treatment time period.

In some other embodiments, the appropriate amount of melatonin can be administered continuously during the appropriate treatment time period, such as in embodiments wherein melatonin is comprised in a subcutaneous implant.

*Treatment time period*

In some embodiments, melatonin can be administered, at the selected frequency, continuously, *i.e.* all along a calendar year.

In some other embodiments, melatonin can be administered during one or more defined time periods during a one calendar year (*i.e.* a time period starting on January 1rst of a given calendar year and ending on December 31 of the same calendar year).

In some other embodiments, melatonin can be administered during a time period of from about two to about five weeks, such as during a time period of from about three to about four weeks, with one or two of such a treatment time period(s) comprised in the same calendar year.

In embodiments wherein melatonin is administered during two treatment time periods in a calendar year, the (i) first treatment time period can preferably start during the month of January and last during the selected treatment time period length and (i) the second treatment time period can preferably start during the month of June and last during the selected treatment time period length. By definition, according to these embodiments, the cumulated duration of the two treatment time periods can be less than twelve months. In some of these embodiments, the first and second treatment time periods can have the same time length. In some other of these embodiments, the first and second treatment time periods can have distinct time length. In some of these embodiments, the first treatment time period can be longer that the second treatment time period. In some other embodiments, the first treatment time period can be shorter that the second treatment time period.

Indeed, because the present disclosure does not relate to alleviating a companion animal from a disorder or a disease, but instead relates to animal aesthetic and possibly life comfort, selection of the treatment duration can be also dependent from the companion animal owner's decision.

*Melatonin-containing compositions*

In some embodiments, the appropriate amount of melatonin can be contained or comprised in a "food supplement", which food supplement can comprise melatonin as the sole constituent, other than the excipient ingredient(s) comprised in a melatonin-containing physiologically acceptable vehicle. In an embodiment, the said food supplement can comprise an effective amount of melatonin.

In some other embodiments, the appropriate amount of melatonin can be comprised in a food composition, such as in a complete food composition. According to these embodiments, the appropriate amount of melatonin can be specifically provided as a separate ingredient and is combined with the other ingredients during the manufacturing process of the food composition, such as of the complete food composition. The food composition, such as the complete food composition, can be a wet food composition, a semi-moist food composition or a dry food composition. In an embodiment, the said food composition, such as the complete food composition, can comprise an effective amount of melatonin.

This disclosure further relates to a food composition for a companion animal, preferably a nutritionally complete food composition for a companion animal, such as for a canine or a feline, most preferably for a cat. The various melatonin-containing food compositions that are encompassed by the present disclosure are further described hereafter. In particular, a melatonin-containing food composition can be selected among a wet food composition, a semi-moist food composition and a dry food composition, and especially among a wet complete food composition, a semi-moist complete food composition and a dry complete food composition.

As used herein, the term "wet food" or "wet food composition" generally refers to a food composition having a moisture content of about 30% or more, generally of more than about 40% by weight, relative to the total weight of the food composition. Preferably, the wet food composition can have a moisture content lower than about 90% in weight, relative to the total weight of the food composition. In general, it is the final product of a process comprising a final step of sterilization (instead of a drying step). In some embodiments, the wet food can consist of a chunk form, more particularly of chunks in gravy form. Preferably, the wet food can consist of chunks and gravy, chunks in jelly, loaf, mousse, terrine, bites form. "Chunks and gravy" products comprise a preformed meat particle prepared by making a meat emulsion and by putting this meat emulsion through a muzzle under pressure and then cooked. A product, such as cooked meat, is diced into chunks, which are eventually mixed with a gravy or sauce. The two components are then filled into a container, usually a can or pouch, which is seamed or sealed and sterilized. As opposed to the ground loaf, chunk and gravy compositions have physically separated, discrete chunks (i.e., pieces of ground meat and grains) as prepared. These discrete particles are present in the gravy-type liquid in the final container. When serving, chunk and gravy products flow out of the can and can be easily mixed with other dry products. While the chunk and gravy products allow better integrity of the individual ingredients, the heterogeneous formulation of the chunk and gravy products are sometimes disfavored by consumers. Wet food compositions are generally packaged in can-like containers and are considered "wet" in appearance because of the moisture contained therein. Two types of wet compositions are generally known in the art. The first is known in the art as "ground loaf." Loaf products are typically prepared by contacting a mixture of components under heat to produce an essentially homogeneous, intracellular honeycomb-type mass or "ground loaf." The ground loaf mass is then packaged into a cylindrical container, such as a can. Upon packing, ground loaf assumes the shape of the container such that the ground loaf must be cut when serving to a companion animal. The wet food composition is preferably packaged. In this way, the consumer is able to identify, from the packaging, the ingredients in the food product and confirm that it is suitable for the particular pet in question. The packaging may be metal, plastic, paper or card.

As used herein, the term "dry food" or "dry food composition" generally refers to a food or composition having a moisture content of less than about 12% by weight, relative to the total weight of the food composition, and commonly even less than about 7% by weight, relative to the total weight of the food composition. In some embodiments, dry food according to the present disclosure can have a moisture content of at most about 12% by weight. In some embodiments, the said dry food can have a moisture content of about 7% or less, such as about 5% by weight. In some embodiments, the dry food has a moisture content of more than about 3% by weight, relative to the total weight of the food composition. For instance, the examples provided herein illustrate a dry food having a moisture content of about 9.5% by weight, relative to the total weight of the food composition. In some embodiments the dry food can consist of a kibble. For example and without limitation, kibbles include particulates; pellets; pieces of pet food, dehydrated meat, meat analog, vegetables, and combinations thereof; and pet snacks, such as meat or vegetable jerky, rawhide, and biscuits. The dry food composition can be manufactured by mixing together ingredients and kneading in order to make consistent dough that can be cooked. In general, it can be the final product of a process comprising an extrusion step followed by a drying step.

The process of creating a dry food is usually done by baking and/or extruding. The dough is typically fed into a machine called an expander and/or extruder, which uses pressurized steam or hot water to cook the ingredients. While inside the extruder, the dough is under extreme pressure and high temperatures. The dough is then pushed through a die (specifically sized and shaped hole) and then cut off using a knife. The puffed dough pieces are made into kibble by passing it through a dryer so that moisture is dropped down to a defined target ensuring stability of the food until consumption. The kibble can then be sprayed with fats, oils, minerals, vitamins, the natural extracts cocktail and optionally sealed into packages. The dry food composition is preferably packaged. In this way, the consumer is able to identify, from the packaging, the ingredients in the food product and confirm that it is suitable for the particular pet, i.e. dog, in question. The packaging may be metal, plastic, paper or card.

As used herein, the term "semi-moist food" or "semi-moist food composition" generally refers to a food composition with an intermediate moisture content of about 12% to about 30% in weight, relative to the total weight of the food composition. Hence, such semi-moist food composition is generally the final product of a process allowing a moisture content value that is intermediate between a dry food and a wet food. In some embodiments, the said process can comprise a step of adding a humectant agent. In some embodiments, the said process can comprise an extrusion step and a subsequent treatment step with Super-Heated Stream (SHS). In some embodiments, the semi-moist food according to the present disclosure containing more than about 12% and at most about 30% moisture by weight, relative to the total weight of the food composition. Illustratively, a semi-moist food composition can have about 11% to about 20% moisture by weight, relative to the total weight of the food composition, and/or a water activity of about 0.64 to about 0.75, preferably both.

According to some embodiments, the moisture content of an animal food composition can be determined by a Loss on Drying Method, comprising the steps of:

(a) Weighing a sample of a food composition, thereby obtained the total weight;
(b) Heating, such as at about 135 $\pm$ 2 °C for about 240 minutes, the sample of step a) in an oven until the moisture is all driven off, thereby obtained a dry sample;
(c) Weighing the dry sample; thereby obtained the dry weight;
(d) Calculating the difference between the total weight and the dry weight, thereby obtaining the moisture weight, as:

$$\underline{\text{Moisture weight} = (\text{total weight}) - (\text{dry weight})}$$

In some embodiments, melatonin used according to the present disclosure can be obtained by conventional methods of chemical synthesis, such as described for example by Hugel et al. (1994, The New Journal for Organic Synthesis, Vol. 27 (1) : 1-31, incorporated herein by reference).

In some other embodiments, melatonin is obtained from melatonin-containing or melatonin-producing microbial cells, typically melatonin-producing bacteria or melatonin-producing yeasts. Notably, different species of both *Saccharomyces* and non-*Saccharomyces* yeasts may be used to obtain melatonin in the process of alcoholic fermentation, such as described for example by Juhnevica-Radenkova et al. (2020, Comprehensive Reviews in Food Science and Food Safety, doi.org/10.1111/1541-4337.12639), by Fernandez-Cruz et al., (2017, Food Chem, Vol. 217 : 431-437) and by Rodriguez Naranjo et al. (2012, J Pineal Res, Vol. 53(3) : 219-224). In some of these embodiments, melatonin-producing microbial cells may consist of recombinant microbial cells such as melatonin-producing recombinant bacterial cells, including recombinant *E. coli* cells, or melatonin-producing recombinant yeast cells, including recombinant *Saccharomyces cerevisiae* cells (both being described for example in WO 2013/127915 or WO 2015/032911).

In some embodiments, melatonin can originate from the supernatant from cultured melatonin-producing microbial cells, such as from the supernatant from cultured melatonin-producing recombinant or non-recombinant bacteria *(e.g. E. coli)* or from cultured melatonin-producing recombinant or non-recombinant yeasts *(e.g. Saccharomyces cerevisiae)*.

In some other embodiments, melatonin can originate from an extract from cultured melatonin-producing microbial cells, such as from an extract from cultured melatonin-producing recombinant or non-recombinant bacteria *(e.g. E. coli)* or from cultured melatonin-producing recombinant or non-recombinant yeasts *(e.g. Saccharomyces cerevisiae)*. Yeast extracts can be obtained by a variety of methods that are well known in the art, such as those based on autolysis and hydrolysis methods, wherein yeast cell wall is disrupted for releasing the cell contents and wherein the soluble fraction thereof is recovered. Illustratively, an aqueous suspension of yeast cells can be autoclaved and then fast cooled on ice, before that the resulting cell debris *(i.e.* the solid fraction) are removed and the melatonin-containing supernatant is recovered.

*Routes for melatonin administration*

According to the present disclosure, melatonin can be administered through various routes. Melatonin can be administered through any suitable route of administration, such as oral, intravenous, rectal, sublingual, mucosal, nasal, subcutaneous, intramuscular or transdermal, administration.

In preferred embodiments, melatonin can be administered by oral route, transmucosal route or subcutaneous route.

Administering melatonin by oral or transmucosal route is already widely documented in the art and thus belongs to the background knowledge of the skilled artisan. Further, oral administration of melatonin is illustrated in the examples herein.

Administering melatonin through the subcutaneous route can be performed (i) by the subcutaneous injection of the selected melatonin dose, *e.g.* by using an appropriate syringe device or (ii) by the introduction of a subcutaneous implant. Subcutaneous melatonin-containing implants, including those designed for companion animal, are well known in the art. It may be cited as non-limitative example the subcutaneous implant marketed under the brand name of Melovine™ commercialized by the French company Ceva.

*Melatonin dosage*

It is well known by the person skilled in the art than the effective amount of a material, such as melatonin, can vary depending on several factors. For example, according to the present disclosure, the person skilled in the art, which could be for instance a veterinarian, a breeder or a clinician, would be able, by using its general knowledge, to determine or adapt the dosage of melatonin.

In some embodiment, melatonin can be administered, during a selected treatment time period at a daily amount ranging from about 0.5 mg/kg of body weight to about 4 mg/kg of body weight.. In such an embodiment, as an example for a cat having a weight of 5 kg, it can be administered between about 2.5 to about 20 mg melatonin per day.

In some embodiment, melatonin can be administered, during a selected treatment time period at a daily amount ranging about 0.5 mg/kg of body weight, about 0.6 mg/kg, about 0.7 mg/kg, about 0.8 mg/kg, about 0.9 mg/kg, about 1 mg/kg, about 1.1 mg/kg, about 1.2 mg/kg, about 1.3 mg/kg, about 1.4 mg/kg, about 1.5 mg/kg, about 1.6 mg/kg, about 1.7 mg/kg, about 1.8 mg/kg, about 1.9 mg/kg, about 2 mg/kg, about 2.1 mg/kg, about 2.2 mg/kg, about 2.3 mg/kg, about 2.4 mg/kg, about 2.5 mg/kg, about 2.6 mg/kg, about 2.7 mg/kg, about 2.8 mg/kg, about 2.9 mg/kg, about 3 mg/kg, about 3.1 mg/kg, about 3.2 mg/kg, about 3.3 mg/kg, about 3.4 mg/kg, about 3.5 mg/kg, about 3.6 mg/kg, about 3.7 mg/kg, about 3.8 mg/kg, about 3.9 mg/kg or about 4 mg/kg of body weight.

In other embodiments, melatonin can be administered, during a selected treatment time period at a daily amount of about 2 mg/kg of body weight. In such an embodiment, as an example for a cat having a weight of 5 kg, it can be administered at about 10 mg melatonin per day.

The present disclosure is further illustrated by, without in any way being limited to, the examples below.

**EXAMPLES**

**A. Materials and Methods**

**A.1. Animals**

Breeders: four breeders, living in the same climate influence (Continental climate)

Cats : four or eight long-hair cats per breeder, split in each group (1 cat of each breeder in each group - if 8 cats: 2 cats of each breeder in each group)

Cat cohort only comprises Ragdolls, Siberians and Persians

Each group of cats is composed of nearly the same ratio of (i) male/female gender and of (ii) neutered/not neutered, with a mean age of 4.4 years.

The detailed cats cohort is detailed in **Table 1** below

Table 1 : Detailed cat cohort

| Dose | Melatonin (mg) | name | Breeder | age | Breed | Neutered | sex |
|---|---|---|---|---|---|---|---|
| A | 0 | Valdemar | 1 | 2 | ragdoll | intact | male |
| | | O Mary | 1 | 3 | persan | intact | female |
| | | Indi | 2 | 4 | Siberian | intact | female |
| | | Feliz | 2 | 7 | siberian | neutered | female |
| | | Bamboo | 3 | 5 | ragdoll | intact | male |
| | | Han | 4 | 6 | ragdoll | neutered | female |
| B | 10 | Pour une Amourette | 1 | 6 | Ragdoll | Intact | Female |
| | | Zabee | 1 | 4 | ragdoll | intact | male |
| | | Tam | 2 | 6 | siberian | neutered | female |
| | | Lilo | 2 | 4 | siberian | intact | female |
| | | Velvet | 3 | 5 | ragdoll | neutered | male |
| | | Ciboulette | 4 | 4 | ragdoll | intact | female |
| - CATS "Tam" was withdrawn on October 10 due to difficulties to give supplement (according to withdrawal criteria). They remained sampled until the end of the study to register the impact of supplement interruption. | | | | | | | |

### A.2. Inclusion criteria

The inclusion criteria are as follows :

- no restriction on nutrition but no diet modification during the trial

- male/female, neutered or not

- more than 18 months old and less than 10 years old

- an appropriate flea control, deworming done during the previous 3 months

- no visible signs suggestive of dermatitis (in case of any doubt, either the cat won't be recruited, or the project manager will be asked for an evaluation)

- do not suffer for systemic disease, BCS: 4, 5 or 6.

### A.3. Non-inclusion criteria

The non-inclusion criteria are as follows :

- Pregnancy or in the 2 months after delivery

- Clinical evidence of ectoparasite infestation (additional tests should be provided if necessary)

- Clinical evidence of bacterial or fungal infections (additional tests should be provided if needed)

- Any long-term therapy

- recent medication (any type of medication except for anti-parasites) in the last 3 months

- shampoo within the last week before inclusion

- Essential fatty acids, vitamins, minerals... supplementation improving hair quality within 56 days prior to the study, and during the study

- Concurrent condition that may deteriorate during the study.

- Major environmental modification in the last 1.5 months.

- Any latitude modification more than 2000 km in the last 1.5 months.

**A.4. Exclusion criteria**

The exclusion criteria are as follows :

- Any significant deterioration of quality of life such as a dramatic degradation of cat's coat, significant reduction of BCS, a bodyweight loss more than 15%.

- A significant behavior alteration lasting more than 4 weeks.

- missing study supplement administration more than one time per ten days

- any bias from the defined protocol will be evaluated by the project manager.

**A.2. Melatonin**

Melatonin (CAS number 73-31-4) under the form of a powder, commercialized by Parchem (Catalog Ref #1-800-282-3982), was used in the assays.
Melatonin powder was dissolved in water and palatable flavor at a final concentration of 0 mg melatonin in 0.2ml liquid (Dose A) or 10mg melatonin in 0.2ml liquid (Dose B) before use.

**A.3. Melatonin administration and assay schedule**

- Each cat has started the trial on June 21st, which is the summer solstice day.

- A first hair and coat check was performed prior to the first occurrence of melatonin administration, which check included coat brushing (and collection of hair loss), behavior statement, and taking a standardized dermoscopic picture.

- Oral daily administration of 10 mg melatonin supplement has began on June 21st and ended on December 21st. A syringe has allowed for accurate withdrawal of liquid melatonin from the bottle. Liquid melatonin has no taste (assessed in a preliminary evaluation). Oral administration has been performed by emptying the syringe into the mouth between the gum and lips commissure, at the level of the carnassial teeth, with the head tilted back for 5 seconds.

- Every 2 weeks, (i) hair loss from standardized brushing, behavior questionnaires (See **Figures 1 and 2**) and (ii) standardized dermoscopic picture have been collected.

**A.4. Qualitative and quantitative assessment of the coat**

The qualitative and quantitative assessment of the coat were as follows :

- hair-loss reduction (hair loss weight collected after each brushing session)

- hair density (dermoscopy)

- Earlier molting, and reduction of molting intensity and duration (hair loss weight) evaluated by standardized brushing

- Global coat improvement (photos of the entire cat, and questionnaire)

- primary/secondary hair ratio (dermoscopy)

- exogen status of hair loss (trichoscopy)

**A.5. Animal behavior**

The assessment of animal behavior consisted in assessing sleep quality and quantity, daily behavior alteration/modification, which parameters were evaluated with a questionnaire (See **Figure 2**)

**A.6. Hair loss assessment (standardized brushing)**

Grooming Brush and asking a unique breeder team member to operate on the four (or eight) recruited cats from the same breeder during the entire protocol. Hair loss from brushing is kept in an individual bag and stored until their shipment to the project manager to be (i) weighed and (ii) analyzed by trichoscopy.
The following Wire Grooming Brush was used : Slicker brush with soft pins - Cats and Small Dogs - brushing surface 7cmx5cm

**A.7. Dermoscopic assay**

Dermoscopy is the gold standard tool to assess hair growth in human. Comparison of pictures taken at the same location at different time delivers insights on hair number and also on hair structure. This technology was extrapolated from human to pets in our study.
The selected device for dermoscopic assay was a wireless ×10 to ×20 magnification. This tool delivers interpretable pictures.
Two photograph pictures were taken every two weeks.

- The first picture was a picture of the whole cat after brushing. The photographer stands at the front right or left of the cat (always the same side per cat during the entire study). The angle between the photographer and the cat will be 45° lateral and above the animal. This picture was taken in standardized condition allowing comparison for each cat during 6 months.

- The second was a "dermoscopic picture". Each breeder was equipped with a macroscopic device adaptable to every smartphone. The photo was taken in the middle of the chest (right or left but always the same side during the study). Hair was parted sideways until the skin was visible. Then the macro device fixed on the smartphone was applied on the prepared area, and the photo was taken. The location was marked on the skin with a permanent pen to allow comparison between successive pictures.

The breeder was the unique person mandated to brush his cats, and also to take global pictures and dermoscopic pictures. He was trained by the project manager. As the breeder was the unique actor, these assessments were considered standardized per group and repeatable. Pictures were sent immediately for a check by the project manager, who asked for new pictures if the quality of the pictures sent to him was not good enough.

**A.8. Behavior questionnaire**

Two questionnaires (**Figures 1 and 2**) were filled every 2 weeks. The aim was to collect information about side effect and confirm the absence of impact on reproduction and mood.
**Questionnaire 1 (Figure 1) :** Interpretation of answers:

"hair loss is reduced": shedding assessment

"hair regrowth": hair cycle activation

"Coat more dense": secondary hairs growth

"coat color more intense": control question to evaluation breeder objectivity (in fact no effect of melatonin on pigmentation)

"texture coat smoother": confirmation that secondary hairs are more dense

"hair longer": fake question to evaluation global quality of breeder's answers (hairs cannot be longer but breeders are not supposed to know it)

"Coat more beautiful": subjective answer from breeders but global assessment

**Questionnaire 2 (Figure 2) :** interpretation of answers

1: Impact on global behavior

2: if answer at 1 was "yes", need to determine if it was due to supplement administration

3: to demonstrate that no impact on cat sleep

4: to demonstrate that oral melatonin doesn't modify diet taste

5: Same question as 1 but with a different wording to validate question 1 answer

6: more subtle assessment of impact of melatonin on cat behavior, but same topic

7: same assessment on behavior but specifically grooming

8: indirect question to test answers on hairball reduction

9: to confirm that melatonin does not reduce sexual activity

10: same question than 1 on reduction of activity

**B. Results**

**Example 1** : **Coat beauty and molting**

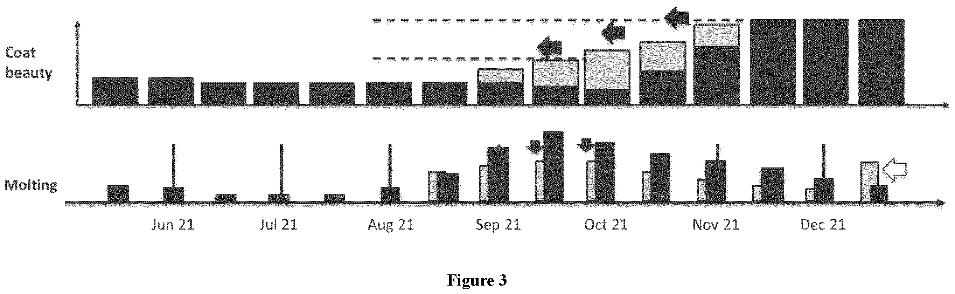

1.1. The results of Figure 3 show the absence of molting for a daily dosage of 10 mg melatonin.
Regarding hair loss reduction :

- hair loss is maintained at the beginning of the melatonin treatment, from June 21 to August 21.

- then, shedding is reduced until the end of the trial in late December.

1.2. As regards hair regrowth, the results relating to the variation with time are shown in **Figure 4A** and **Figure 4B,** respectively. The results of figures 4A and 4B show that administering melatonin allows drastically reducing variation in the hair regrowth with time, thus ensuring a more constant coat thickness.
Regarding hair loss, the results relating to the variation with time are shown in **Figure 5A** and **Figure 5B,** respectively. The results of figures 5A and 5B 16
Regarding coat beauty, the results relating to the variation with time are shown in **Figure 6A** and **Figure 6B,** respectively.
The results show that without melatonin administration, an acute molting occurs at the beginning of the month of October.
Melatonin reduces summer coat duration and at least reduces molting severity.
At a daily melatonin dose of 10 mg, molting does not occur at all.
Further, at a daily melatonin dose of 10 mg, secondary hairs are present the whole bi-season and a short molting period appears in late December.
The results also show that without melatonin, the coat remains beautiful until molting at the beginning of October.
Melatonin promotes a sooner coat beauty, which encompasses a reduction of summer coat duration and an early soft molting, with a soft molting reappearing later in December. With melatonin, the coat remains constantly beautiful.
Melatonin causes a constant hair growth and significantly reduces shedding and molting.
Further, melatonin allows the coat having a constant quality and beauty throughout the year, whereas the animals that have not received melatonin had a reduced coat beauty after the beginning of molting.

**Claims**

1. The use of melatonin for reducing molting in a companion animal.

2. The use according to claim 1, wherein the companion animal is a feline, preferentially a cat.

3. The use according to any one of claims 1 and 2, wherein the melatonin is administered orally.

4. The use according to any one of claims 1 to 3, wherein the melatonin is comprised in a melatonin-containing composition.

5. The use according to any one of claims 1 to 4, wherein the melatonin or the melatonin-containing composition is administered as a food supplement.

6. The use according to any one of claims 1 to 4, wherein the melatonin or the melatonin-containing composition is comprised in a complete pet food composition.

7. The use according to claim 1 or 2, wherein the melatonin is administered by subcutaneous, transdermal or intradermal routes.

8. The use according to any one of claims 1 to 7, wherein the melatonin is comprised in an extract from a melatonin-producing microorganism, preferably an extract from a melatonin-producing yeast.

9. The use according to any one of claims 1 to 6 and 8, wherein the melatonin is administered daily.

10. The use according to any one of claims 1 to 6 and 8 to 9, wherein the melatonin is orally administered at a daily amount ranging from about 0.5 mg/kg of body weight to about 4 mg/kg of body weight.

11. The use according to any one of claims 1 to 6 and 8 to 9, wherein the melatonin is orally administered at a daily amount of about 2 mg/kg of body weight.

12. A method for reducing molting in a companion animal comprising a step of administering melatonin, preferably orally, to the said companion animal, which companion animal is preferably a feline, most preferably a cat.

13. The method of claim 12, wherein the melatonin is comprised in a food supplement or in a complete food composition.

14. The method according to claim 12, wherein the melatonin is orally administered at a daily amount ranging from about 0.5 mg/kg of body weight to about 4 mg/kg of body weight of the companion animal.

15. A melatonin-containing food composition for a companion animal which is selected among a wet complete food composition, a semi-moist complete food composition and a dry complete food composition.

16. The melatonin-containing food composition of claim 15, which consists of a nutritionally complete food composition.

**1-Cat Identification**

**2- Survey Date**

**3- On alopecia areas, hair has grown back**

    ☐ Absolutely   ☐ yes   ☐ yes &no   ☐ no   ☐ definitely not

**4- Globally, shedding has decreased**

    ☐ Absolutely   ☐ yes   ☐ yes &no   ☐ no   ☐ definitely not

**5- Hair density increased**

    ☐ Absolutely   ☐ yes   ☐ yes &no   ☐ no   ☐ definitely not

**6- Increased coat color**

    ☐ Absolutely   ☐ yes   ☐ yes &no   ☐ no   ☐ definitely not

**7- Coat is smoother**

    ☐ Absolutely   ☐ yes   ☐ yes &no   ☐ no   ☐ definitely not

**8- Coat is longer**

    ☐ Absolutely   ☐ yes   ☐ yes &no   ☐ no   ☐ definitely not

**9- Globally, coat is more beautiful**

    ☐ Absolutely   ☐ yes   ☐ yes &no   ☐ no   ☐ definitely not

**10- Has your cat's behavior changed?**

    ☐ A lot     ☐ yes   ☐ a little     ☐ not at all

**Figure 1**

11- Does the supplement administration impacted your cat's behavior or mood?

☐ A lot ☐ yes ☐ a little ☐ not at all

12- Has the supplement modified your cat's sleep?

☐ A lot ☐ yes ☐ a little ☐ not at all

13- Has the supplement changed your cat's eating habits (less appetite, meowing, aversion...)?

☐ A lot ☐ yes ☐ a little ☐ not at all

14- Has the supplement changed your cat's play and environmental interactions (nervous, no play, not exploratory, not more curious...)?

☐ A lot ☐ yes ☐ a little ☐ not at all

15- Has the supplement modified your cat's habits (sleeping place, playground, eating place...)?

☐ A lot ☐ yes ☐ a little ☐ not at all

16- Has the supplement modified your cat's grooming habits?

☐ A lot ☐ yes ☐ a little ☐ not at all

17- Has the supplement modified your cat's digestion?

☐ A lot ☐ yes ☐ a little ☐ not at all

18- Has the supplement changed your cat's sexual behavior (heat, fighting...)?

☐ A lot ☐ yes ☐ a little ☐ not at all

19- Has the supplement modified your cat's territory (spending more time indoors, outdoors, seeking heat or cold,...)?

☐ A lot ☐ yes ☐ a little ☐ not at all

**Figure 1 (Continued)**

1. Has your cat's behaviour changed in the last two weeks?
   □ not at all    □ a little    □ quite a bit    □ very much

2. Did the administration of the supplement affect your cat's **behaviour** and/or mood? (more lazy, more nervous, more aggressive, hides away, more reserved, etc.)
   □ not at all    □ a little    □ quite a bit    □ very much

3. How much was your cat's **sleep** disturbed by the supplement?
   □ not at all    □ a little    □ quite a bit    □ very much

4. How much were your cat's **meals** disturbed by the supplement?
   □ not at all    □ a little    □ quite a bit    □ very much

5. How much were your cat's **playing activities** and interaction with the environment disturbed by the supplement? (it is more lazy, nervous, does not play, is not curious anymore, it does not explore anymore, etc)
   □ not at all    □ a little    □ quite a bit    □ very much

6. How much has the supplement changed your cat's **usual habits**? (change in place where he is allowed to sleep, live, eat, diet, etc)
   □ not at all    □ a little    □ quite a bit    □ very much

7. How much was your cat's **grooming** disturbed by the supplement?
   □ not at all    □ a little    □ quite a bit    □ very much

8. How much was your cat's **digestion/elimination** behaviour modifyied by the supplement? (diarrhea, hairball, vomiting, etc.)
   □ not at all    □ a little    □ quite a bit    □ very much

9. How much impact did the supplement have on your cat's **sexual behaviour**? (no sexual activity, fighting, sexual activity, etc.)
   □ not at all    □ a little    □ quite a bit    □ very much

10. How much impact did the supplement have on your cat's **preferred territory**? (most indoor/outdoor, seeking cold/hot, etc)
    □ not at all    □ a little    □ quite a bit    □ very much

**Figure 2**

Figure 3

**Figure 4A**

**Figure 4B**

Figure 5A

**Figure 5B**

Figure 6A

**Figure 6B**

Europäisches
Patentamt

European
Patent Office

Office européen
des brevets

# EUROPEAN SEARCH REPORT

Application Number

EP 22 19 4444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/249785 A1 (GORDON JOHN G [US]) 10 November 2005 (2005-11-10) * claims * * paragraphs [0002], [0004] – [0013] * | 1-16 | INV. A23K20/111 A23K20/184 A23K50/40 |
| A | XIAO Y ET AL: "Effects of melatonin implants on winter fur growth and testicular recrudescence in adult male raccoon dogs (Nyctereutes procyonoides)", JOURNAL OF PINEAL RESEARCH, MUNKSGAARD, COPENHAGEN, DK, vol. 20, no. 3, 1 April 1996 (1996-04-01), pages 148-156, XP008118231, ISSN: 0742-3098, DOI: 10.1111/J.1600-079X.1996.TB00251.X [retrieved on 2007-01-30] * abstract * | 7 | |
| A | MAUREL D ET AL: "Effects of photoperiod, melatonin implants and castration on molting and on plasma thyroxine, testosterone and prolactin levels in the european badger (Meles meles)", COMPARATIVE BIOCHEMISTRY AND PHYSIOLOGY. PART A. COMPARATIVE PHYSIOLOGY, ELSEVIER SCIENCE LTD, US, vol. 93, no. 4, 1 January 1989 (1989-01-01), pages 791-797, XP025403191, ISSN: 0300-9629, DOI: 10.1016/0300-9629(89)90503-3 [retrieved on 1989-01-01] * abstract * | 7 | TECHNICAL FIELDS SEARCHED (IPC) A23K C11C |

-/--

The present search report has been drawn up for all claims

| Place of search | Date of completion of the search | Examiner |
|---|---|---|
| Munich | 25 January 2023 | Hartlieb, Ariane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 22 19 4444

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GIMENEZ F ET AL: "Suppression of estrus in cats with melatonin implants", THERIOGENOLOGY, LOS ALTOS, CA, US, vol. 72, no. 4, 1 September 2009 (2009-09-01), pages 493-499, XP026392831, ISSN: 0093-691X [retrieved on 2009-06-16] * abstract * | 7 | |
| A | CA 3 142 999 A1 (UNIV DANMARKS TEKNISKE [DK]; UNIV COLUMBIA [US]) 17 December 2020 (2020-12-17) * claims * | 8 | |

TECHNICAL FIELDS SEARCHED (IPC)

The present search report has been drawn up for all claims

| Place of search | Date of completion of the search | Examiner |
|---|---|---|
| Munich | 25 January 2023 | Hartlieb, Ariane |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
.......................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 22 19 4444

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2023

| Patent document cited in search report | | Publication date | Patent family member(s) | | Publication date |
|---|---|---|---|---|---|
| US 2005249785 | A1 | 10-11-2005 | CA | 2535771 A1 | 03-03-2005 |
| | | | EP | 1663061 A2 | 07-06-2006 |
| | | | US | 2005249785 A1 | 10-11-2005 |
| | | | US | 2009131504 A1 | 21-05-2009 |
| | | | WO | 2005018486 A2 | 03-03-2005 |
| CA 3142999 | A1 | 17-12-2020 | AU | 2020293577 A1 | 06-01-2022 |
| | | | CA | 3142999 A1 | 17-12-2020 |
| | | | CN | 114450392 A | 06-05-2022 |
| | | | EP | 3983534 A1 | 20-04-2022 |
| | | | JP | 2022535958 A | 10-08-2022 |
| | | | WO | 2020249784 A1 | 17-12-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013127915 A
- WO 2015032911 A

**Non-patent literature cited in the description**

- **MILNER et al.** *J Invest Dermatol,* 2002, vol. 119 (3), 640-644
- **JOHNSON.** *Mammalian Rev,* 1972, vol. 1, 198-208
- **FISCHER.** *Hautartz,* 2009, vol. 60 (12), 962-972
- **ZHANG et al.** *Frontiers in cell and developmental Biology,* 2021
- **ALLAIN et al.** *Reprod Nutr Dev,* 1980, vol. 20 (1A), 197-201
- **LINCOLN et al.** *JReprod Fertil,* 1985, vol. 73, 241-253
- **WEBSTER et al.** *J Reprod Fertil,* 1985, vol. 73 (1), 255-260
- *CHEMICAL ABSTRACTS,* r 73-31-4
- **HUGEL et al.** *The New Journal for Organic Synthesis,* 1994, vol. 27 (1), 1-31
- **JUHNEVICA-RADENKOVA et al.** *Comprehensive Reviews in Food Science and Food Safety,* 2020
- **FERNANDEZ-CRUZ et al.** *Food Chem,* 2017, vol. 217, 431-437
- **RODRIGUEZ NARANJO et al.** *J Pineal Res,* 2012, vol. 53 (3), 219-224
- *CHEMICAL ABSTRACTS,* 73-31-4